# EUROPEAN PATENT SPECIFICATION

(11) **EP 4 183 619 B1**
(45) Date of publication and mention of the grant of the patent: **28.10.2026**
(21) Application number: 21208735.7
(22) Date of filing: 17.11.2021
(51) Int. Cl.: B60L 53/35, B60L 53/14, B60L 53/37

(54) **A RESOURCE SUPPLY MANAGEMENT DEVICE OF A VESSEL AND A METHOD FOR MANAGING THE RESOURCE SUPPLY**
RESSOURCENVERSORGUNGSVERWALTUNGSVORRICHTUNG EINES SCHIFFES UND VERFAHREN ZUR VERWALTUNG DER RESSOURCENVERSORGUNG
DISPOSITIF DE GESTION DE L'ALIMENTATION EN RESSOURCES D'UN NAVIRE ET PROCÉDÉ DE GESTION DE L'ALIMENTATION EN RESSOURCES

(43) Date of publication of application: 24.05.2023
(73) Proprietor: Scaleup OÜ, 75119 Kose (EE)
(72) Inventor: Jõgi, Alar, 76403 Alliku (EE)
(74) Representative: Aaltonen, Janne Lari Antero

(56) References cited:
- EP-A1- 3 862 215
- US-A1- 2017 050 526

## Description

### TECHNICAL FIELD

The present disclosure relates generally to automatic charging and electrical power transferring systems, more specifically to the field of providing electrical connection and electricity to the vessels, land vehicles, aircrafts.

### BACKGROUND

When marine vehicles such as a vessel, a ship, a boat or a ferry arrive to the port, the vehicles need to be provided with electricity. The electricity is needed for the battery ferries for charging the batteries and other vessels for supplying the vessel's electrical equipment with electricity during the stay in the port.

In the prior art there are several known systems which enable to transfer the electrical cables to the vessel to provide electrical power to the vessels. Such power transfer systems are typically towers with a height of 8 or more meters and can be located on a ramp in different heights or on a quay, wherein the ramp or quay and the vessel both may move during the power transfer operation. Such solutions may cause several problems and make supplying electrical energy to the vessel difficult.

One of the main problems is that the vessel to be supplied with the electrical cable tend to move during the power transfer process. This is caused by the waves, loading and unloading, high and low tides, wind and other weather conditions. Thus, vessel landing precision sideways and guiding the power transfer system precisely is very critical and the power transfer system has to be free to move with the vessel when connected to the vessel. The known systems are not able to compensate the vessels movements during connection, power transfer removing of the connector arm of the system. Moreover, the known systems may get damaged by the movement of the vessel.

Another problem is that, the vessels are staying in the port only very limited time for unloading and loading, thus speed of connecting the electrical cables and the duration of the power transfer process is important because battery powered vessels are in port only 7 to 8 minutes and power transfer time has to be maximum. The known systems are not automated in that extent that would be able to connect the cables to the vessel so that the power transfer process could be maximum, i.e., connecting the cables with known systems may take up to several minutes and is thus too slow, which in turn reduces the maximum charging or power transfer time. Thus, when the vessel arrives to the port, it is very critical to connect the power cables to the power connection cabinet of the vessel as quickly as possible to use the time the vessel stays at the port for power transfer as efficiently as possible.

Thirdly, due to the height the known system may damage the vessel or other systems, devices and equipment on the shore. Harsh weather conditions such as, wind, waves, ice, vessel movements make cable connection and power transfer process even more complicated.

For example, document EP3862215A1 describes an automated electric vessel charging system. The described automated electric vessel charging system is hindered by inefficiencies in its coupling and decoupling process, which are time-consuming and not streamlined for speed, affecting the charging efficiency of vessels. The system struggles in harsh maritime conditions, such as high waves and changing water levels, compromising its reliability and consistent performance. Safety risks are posed by the handling of the electrical connector due to exposed electrical components, and accurately aligning the connector is complicated due to the device's design imprecision and inadequate guidance systems. Additionally, the system faces challenges with the durability of components in marine environments, lacks detailed emergency protocols, and struggles with interference in communication technologies. Its complexity necessitates extensive customization for different vessels and results in high installation and operational costs.

Another example, US20170050526A1, describes an automated system for connecting two moving objects to each other. The described automated system, designed to connect moving objects, is unsuitable for quick, safe, and reliable connections in marine environments. The system's reliance on precise sensors is problematic due to the constant movement at sea, causing delays and misalignments. Its need for exact coordination between a movable robot and control system is complicated by dynamic maritime conditions, impacting its speed and reliability. The design inadequately addresses safety issues, especially in energy transfers, and struggles with optimizing transfer efficiency due to the marine setting's variability. Additionally, the system's ability to maintain accurate positioning in real-time and adapt to different environmental conditions and vessel types is uncertain, lacking specific solutions for robustness, data processing complexities, and broad compatibility.

Therefore, in light of the foregoing discussion, there exists a need to overcome the aforementioned drawbacks of known techniques on how to supply cables and electrical power to the vessels during the short stay in the port.

### SUMMARY

An aim of the present disclosure is to provide a solution that overcomes the problems encountered in prior art. According to the present disclosure the aim is achieved by a resource supply management device of a vessel, a method and a controller program for managing the resource supply process as defined in the appended independent claims to which reference is made to. Advantageous features are set out in the appended dependent claims.

Embodiments of the present disclosure substantially eliminate or at least partially address the aforementioned problems in the prior art, and enable efficient transfer of cables to vessels in the port or to the vehicles in the station. The device and method according to the present disclosure enable fast automatic mechanical connection within 10 - 20 seconds and disconnection automatically, thus to achieve a maximum connection time during the vessel stay in the port or the vehicle stay in the charging station. The device is designed and built in a way that vessel movements will not damage the equipment. The telescopic arm of the resource supply management device can easily move together with the vessel. The device, according to the present disclosure does not affect the scenery and doesn't intervene with the operating of other port equipment due to the ergonomically construction. Additional aspects, advantages, features and objects of the present disclosure would be made apparent from the drawings and the detailed description of the illustrative embodiments construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings, with reference to the following diagrams wherein:
FIG. 1 is an illustrative view of a resource supply management device according to an embodiment of the present disclosure;
FIG. 2A, FIG. 2B and FIG. 2C illustrate moving of the resource supply management device shown in FIG. 1 according to the present disclosure;
FIG. 3A and FIG. 3B illustrate an alternative embodiment of the device according to the present disclosure;
FIG. 4 is a block-scheme illustrating the method according to an embodiment of the present disclosure.

### DETAILED DESCRIPTION OF EMBODIMENTS

The following detailed description illustrates embodiments of the present disclosure and ways in which they can be implemented. According to an embodiment, the present disclosure provides a resource supply management device for a vessel, wherein the resource supply device comprises a main controller comprising a memory to store power supply unit data, sensor data, camera data, and a processor configured to control and manage a resource supply process, to receive data from a power supply unit, based on the information received from the power supply unit the processor of the main controller is configured to manage the operating of the power supply unit; a vertical frame having a first support and a second support; a lifting means attached to the vertical frame, wherein the lifting means comprise a sledge and a lifting actuator, and the sledge is mounted to the vertical frame between the first support and the second support; a telescopic arm arranged between the first support and the second support to move vertically upwards and downwards and to rotate angularly and to tilt, the telescopic arm comprising a base section having a first end and a second end opposite to the first end and a telescopic section adapted to move inside the base section, wherein the first end is pivotally connected to the lifting means; a tilting means arranged to enable angular rotation and tilting movement of the telescopic arm, the tilting means comprising a cap end and a rod end, wherein the cap end is pivotally connected to the lifting means and the rod end is pivotally connected to the base section of the telescopic arm; a length adjusting means arranged to move the telescopic section within the base section of the telescopic arm; a horizontal compensator attached to an end of telescopic section and arranged to be moving and pivoting to compensate for the vessel's movement; a supply head fastened to the horizontal compensator, wherein the supply head is arranged to move in the horizontal plane relative to the telescopic section; one or more resource supply channels arranged through the telescopic arm; the power supply unit connected to the main controller.

The embodiments of the resource supply management device for the vessels according to the present disclosure (hereinafter the device) can be located on ports, on quay close to water level, to permit electrical connection of the vessel having a resource transfer socket, wherein the resource transfer socket is connected to a vessel power or battery management system. The power transfer can be carried out in the ports or in the charging stations of the land or air vehicles. I.e., herein, the vessel may be a ship, a boat, a cruise ship, a yacht, a container vessel, a ferry, a cruise ship, a floating platform, an aircraft, a train and the like, with or without the batteries. The vessel may be an electric vessel, a hybrid vessel, a diesel vessel, a gas vessel. The vessel may also be an autonomous or semiautonomous vessel or vehicle. In an exemplary embodiment the charging voltage may be DC 1000V, AC 06/1,0 kV, the charging current may be up to 10000A, the power may be up to 10000 kW.

The device is for providing resources such as electrical cables and electricity for the vessels with batteries and without batteries when the vessels are at port. The purpose is that when a vessel arrives to the port, automatic connection within 10 - 20 seconds between telescopic arm of the device and the vessel is performed for quick cables and power transfer. The device is suitable for the side of the vessel or on top of the car ramp. Optionally the device can be remotely controllable, may comprise a housing, a weather tight door or hatch for maintenance, a removable safety fence.

The purpose is to provide an automatic resource supply management device to deliver electrical power to electric vessels during cars and passenger loading and unloading. The device enables a safe, fast and reliable way to connect the vessel to shore power or to alternative connections. The device is designed and built in an ergonomically way so that vessel movements will not damage the equipment and the telescopic power transfer arm can easily move together with the vessel.

The device enables an active movement compensation by moving the telescopic arm according to the movements of the vessel when the vessel is mooring. The height of the device is regulated automatically according to the up and down movements of the vessel.

When the device is connected to the vessel, the device enables a passive movement compensation, the tilting means and the supply head are moving freely, thus nor risk to damage the device nor the vessel. I.e., the telescopic arm of the device is configured to move together with the vessel according to the vessel's motions when resource (e.g., cables, power) transfer occurs without causing mechanical damages on the telescopic arm and supply head (i.e., the plug).

The device further enables to reduce the installation space on the quay by its compact and ergonomic construction. Due to the compact construction the device can thus be installed to the ramp, quay or pier on the shore or in the port or to the vessel's ramp or other resource supply location. As an additional advantage, the charging device can be installed in locations of extreme tidal ranges.

The device enables a fast connection in 10-20 seconds and fast charging time in 7-15 minutes. Connecting the power cables to the vessels thus can be from 10, 11, 12, 13, 14, 15, 16, 17, 18 or 19 seconds up to 11, 12, 13, 14, 15, 16, 17, 18, 19 or 20 seconds. The power transfer time can be thus from 7, 8, 9, 10, 11, 12, 13 or 14 minutes up to 8, 9, 10, 11, 12, 13, 14 or 15 minutes. When an electric or a hybrid vessel, where fast charging is required, the vessel comes to the port, there is only limited time (i.e., few minutes) to unload and load passengers, vehicles and goods. The device according to the embodiments of the present disclosure enables quickly to provide the electrical cables to the vessel and provide the power transfer or charging to the vessel during unloading and/or loading. The cables to be provided to the vessel for providing electrical power may have nominal voltage from 110V to 20kV, e.g., 400V, 440V, 690V, 6.6kV or 11kV and apparent power of 1-30 megavolt amperes (MVA).

The device also enables overnight charging and hotel load (i.e., power for the vessel's own consumption, lights, ventilation, kitchens, and other applications) for the vessel. In case of diesel or gas vessels coming in and staying in the port longer times the device enables to supply such vessels with power, so the vessel has no need to use generators. Therefore, as the device also has compact dimensions, multiple devices can be used in the port side-by-side or according to the alternative embodiment of the present disclosure the device may comprise a rotating base.

The device may be operated by powering the device directly from the shore power connection or alternatively the device may comprise batteries to ensure an independent power supply to the device.

According to the embodiments, an essential part of the device is the main controller. The main controller of the device comprises a memory to store power supply unit data, sensor data, camera data from the camera controller, and a processor configured to control and manage the resource supply process, to receive the data from the hydraulic pressure unit, based on the information received from the hydraulic pressure unit the processor of the main controller is configured manage the operating the power supply unit.

The device can be operated in two operating modes, in manual operating mode or in automatic operating mode. In the automatic operating mode, the device is configured to start the power transfer process when the control unit of the device has received the signal from the vessel's sensor configured to determine that the vessel's ramp has moved down. In the manual mode the device may optionally comprise a START button, wherein pressing the START button, the device has started manually after the vessel's ramp has moved down.

In an embodiment the device may optionally comprise a STOP button which is adapted to work the same way in both operating modes. By pressing the STOP button, the power supply process will be interrupted and the telescopic arm of the device is returned to its waiting position.

The telescopic arm is moved by a hydraulic system and the moving of the telescopic arm is controlled at least by the main controller. The device is equipped with the integrated positioning sensors for the absolute and precise operation. The device can be operated wirelessly from the vessel by using a radio system, by a Bluetooth or by other suitable means or alternatively, manually by using a touch screen and control board with physical buttons. The device can also be securely accessed over the Internet and most LAN and WAN networks through an encrypted VPN connection for fast diagnostics or logging of operational data and statistics.

On the vessel side matching resource transfer socket is installed. When the vessel is moored, then resource supply process begins after obtaining a start command from the vessel. The telescopic arm of the device with supply head will be guided automatically to the resource transfer socket of the vessel. The device is built in a way that vessel movements will not damage the equipment.

The frame of the resource supply management is a structure for mounting other components of the device. According to the embodiments, the frame may also accommodate sensors, switches and other electrical components. According to the embodiments the frame can be installed directly to the quay, dock, pier or ramp. Optionally, the device may further comprise a rotatable platform on which the frame is attached. The rotatable platform allows a wider operating radius.

The lifting means comprise a sledge and a lifting actuator, wherein the lifting actuator can be e.g., a lifting cylinder or a servomotor for moving the sledge together with the telescopic arm vertically upwards and downwards. The lifting sledge may be mounted to the frame between the first support and the second support. Alternatively, the lifting means can be a lifting cylinder. The lifting means including the lifting cylinder enables vertical movement of the telescopic arm.

When the vessel comes into the port, automatic connection between the telescopic arm and the vessel is done for quick power transfer by moving the supply head (i.e., the plug) close to the vessel and inserting the supply head into the resource transfer socket on the vessel. The vessel can move during connection and during power transfer. In additional embodiment the device is configured, when placed on the ramp, to take into account the ramp movements +15 to -15 degrees. Depending on the ramp angle, the telescopic arm is positioned into horizontal position before the supply head is extended towards the vessel. When the ramp angle changes the angle of the telescopic arm in respect of the resource transfer socket on the vessel is determined by the main controller configured to receive the camera image and calculate the angle.

The embodiments of the present disclosure enable to fit the device between the ramp cylinders and vessel's hatch without colliding the vessel's external ramp. The telescopic arm of the device according to the embodiments, depending on the vessel's movements and high tide and low tide, is configured to have longitudinal variation +/- 300 mm, angular deviations in all directions +/-2 degrees. The telescopic arm length may be 2.0-3.9 meters during charging. The height of the telescopic arm may thus be regulated up to +/- 1m in respect of the surface of the quay. The sideways linear movement of the supply head is arranged to be +/- 250 mm. The telescopic connection arm is configured to synchronize itself with movements of the vessel and insert the supply head into the resource transfer socket.

The height of the resource transfer socket from the surface of the quay may be 1.2m-3.2m, e.g., 2.2m. The distance of the vessel from the quay may be 1.1-2.5 meters, e.g., 1.4-1.9 meters. Depending on the ice during the winter period, the device is adapted to operate further away from the vessel. The device can be thus used in harsh weather conditions, e.g., wherein the temperature may vey from -30 to +35 degrees Celsius.

The tilting means is mounted to the upper part of the base section, to the lower part of the base section or to the side part of the base section. The tilting means allows angular rotation of the telescopic arm. The tilting means enables tilting movement of the telescopic arm allowing it to turn the device from parking position into horizontal working position and from working position into parking position. The tilting means may be mounted to the upper part of the base section, to the lower part of the base section or to the side part of the base section. The tilting means can be a hydraulic tilting cylinder or a tilting actuator. The tilting actuator may be e.g., electric actuator, linear actuator, servo motor or screw transmission arranged to perform the tilting means tasks.

The length adjusting means enables to lengthen and shorten the length of the telescopic arm. When the signal is received that the supply head is inserted to the resource transfer socket, the length adjusting means and tilting means are released into free moving position and both move together with the moving of the vessel. The length adjusting means can be a hydraulic telescopic cylinder or a length adjusting actuator (e.g., electric actuator, linear actuator, servo motor or screw transmission) adapted to adjust the length of the telescope.

The tilting means and length adjusting means enable longer run of the connection arm towards the vessel along the axis of the connection arm. This is extremely important when the device is installed on the quay and due to the obstacles, the vessel is therefore away from the quay. The obstacles can be shallow water or ice between the quay and the vessel that prevents the vessel from steering near to the quay. Furthermore, the tilting means and length adjusting means further enable the device to be folded when the device is not in use, which provides additional installation space savings and thus the device does not block operating of other vessels, port vehicles or equipment.

When due to the moving of the vessel the angle of the telescopic connection arm changes, the device regulates by the lifting means and tilting means the angle of the telescopic connection arm so that the telescopic connection arm remains horizontal at the same height with the resource transfer socket of the vessel.

The horizontal compensator may be a hydraulic cylinder or an electric actuator or motor for holding and moving the supply head. The horizontal compensator is arranged to be moving and pivoting to compensate for the vessel's movement during connection in operation and also during power or other resources transfer operation. The horizontal compensator enables side to side movement and allows the supply head to move in the horizontal plane relative to the telescopic section. This enables linear movement sideways +/- 250 mm. Optionally, the horizontal compensator comprises a spherical joint. The spherical joint is arranged to compensate for the yaw, roll and pitch of the supply head +/- 5 degrees. The supply head is fastened to the telescopic arm end by the spherical joint. The supply head is an electrical connector plug comprising primary connection knives for power connection and one or more secondary pilot contacts. Power connection will carry circuit current up to 5000A on 1000VDC. Connection is designed in principle, that on disconnecting of the supply head will be disconnected first secondary pilot pins and after that primary contacts. This is important for ensuring safe interruption of primary circuits by system commutation devices and to avoid circuit breaking by supply head contacts. Hydraulic telescopic arm with supply head is guided automatically to the resource transfer socket of vessel. The supply head is moved forward (e.g., up to 0.5 meters) towards the vessel side.

The resource supply channels are for accommodating electrical cables for the power transfer. The resource supply channels are arranged to accommodate the cables from the shore connection box to the supply head. Optionally, the resource supply channels are arranged to accommodate the cables from the junction box to the supply head. According to the embodiments, the resource supply channels may be arranged through the telescopic arm. Optionally, the one or more resource supply channels may comprise the liquid transferring means. The liquid transferring means may be pipes or hoses for supplying the vessel with fuels (e.g., diesel, gasoline, hydrogen) or water or for removing waste waters.

The power supply unit can be a hydraulic power unit or an electrical power unit. In the embodiments, wherein the tilting means and the length adjusting means are hydraulic cylinders, the power unit is the hydraulic power unit. The hydraulic power unit is configured to provide oil pressure and flow to hydraulics of the device. The hydraulic power unit is managed by the main controller and is configured to provide to the main controller the data of oil temperature, oil level, oil pressure.

In other embodiments, wherein the tilting means and the length adjusting means are electrical means, e.g., electric actuators, linear actuators, servo motors or screw transmissions the power unit is electrical power unit. The embodiments of tilting means and the length adjusting means comprising electrical means enables to provide oil free device and thus to reduce the oil pollution risks in the ports and the risk to the environment is lower. As the device comprising hydraulic cylinders may cause oil pollution due to the possible oil leakage and thus the maintenance may be complicated then the device comprising electrical tilting means and the length adjusting means enables less work intensive maintenance.

The device may be further configured to detect icing of the sensors and loss of power to avoid damage to the device, e.g., E.g., when power outage occurs on port side, the device optionally comprises accumulators built in which enable disconnection of the telescopic arm so that vessel can still proceed safely on its voyage. The device may further comprise sensors configured to detect hose rupture to determine oil leakage.

According to an embodiment, the device may optionally comprise one or more distance determining means. The distance determining means is selected from a distance laser, a distance or proximity sensor, a motion camera to monitor the distance between the supply head and the resource transfer socket on the vessel. The laser measuring or sensing the proximity of the resource transfer socket enables it to secure the precise connection of the supply head to the resource transfer socket.

Optionally, the device may comprise a first distance sensor configured to determine a distance of the supply head of the telescopic arm from the resource transfer socket of the vessel. The device may optionally comprise a second distance sensor configured to determine the height of the lifting means from the surface of the ground. The device may optionally comprise a third distance sensor configured to determine the distance of the telescopic section in respect of the base section of the telescopic arm.

Optionally, the device may comprise a gyroscope sensor located on the telescopic arm. The gyroscope sensor is configured to measure the movements of the vessel and send the determined movement data of the vessel to the main controller to enable to adjust the telescopic arm to horizontal position. The height of telescopic arm is adjusted to the horizontal position by the lifting means according to the vessel's up and down movements. The signal is received in the main controller from a gyroscope sensor.

According to an embodiment, the device may further comprise a supply head positioning unit. The supply head positioning unit may be a machine vision unit comprising a camera system, a radar, a local positioning system, a thermal sensor, an infrared sensor, a radio communication means. The supply head positioning unit is necessary for sensing and tracking the position of the supply head to enable to get the supply head into the correct position and close to the resource transfer socket. The supply head positioning unit may be attached to the supply head and comprises a camera and a camera controller for location analysis and guiding connector, wherein the camera controller is connected to the main controller configured to control the camera. Optionally, the supply head positioning unit may comprise in addition or instead of a camera system a local positioning system for more precise location analysis and guiding. Movement of the telescopic arm of the device is guided by the supply head positioning unit. The supply head positioning unit is configured to look for markers dedicated on the resource transfer socket for positioning. The machine vision guidance procedure performed by the main controller may comprise following steps: starting the machine vision guidance and moving the telescopic arm to a, optionally preprogrammed, location and, optionally predefined, certain distance (e.g., one meter) from the vessel at the top-most position, i.e., highest possible position where the resource transfer socket on the vessel can be found; from this position the telescopic arm is arranged to start to move downwards; the supply head positioning unit, e.g., the machine vision unit, is configured to let the main controller know when it discovers positioning markers; once the resource transfer socket is discovered, the coordinates of the resource transfer socket are sent to the main controller to initiate the telescopic arm to move towards the vessel; the camera is configured to take pictures in 1 - 300 milliseconds (i.e., from 1, 10, 25, 50, 75, 100, 125, 150, 175, 200, 225, 250 or 275 up to 5, 15, 35, 60, 80, 105, 130, 155, 180, 205, 230, 255, 280 or 300 milliseconds) and the supply head positioning unit continues to send coordinates of the resource transfer socket to the main controller until connection successful signal has been received from distance sensors; coordinates of the resource transfer socket are sent to main controller; movement of the telescopic arm is corrected according to information received; the supply head is connected to the resource transfer socket.

According to an embodiment, the device may further comprise at least one of a communication means, a secondary control unit, an electrical junction box, an electrical switchboard. The communication means may be wireless communication means such as radio transmitter, Bluetooth or other wireless communication unit. The communication means enable the device when the vessel approaching to the dock to establish a handshake between the device and vessel to enable the subsequent mechanical and electrical connection. The distance from the device at which the connection with the vessel is made will be determined may be approximately 10 - 60 meters. The wireless communication means may be a functional link between shore and vessel for duplicating e.g., VDSL2 TCP/IP channel. Functional information and control signals for adjusting charging current and voltage may be exchanged by TCP/IP channel with Modbus TCP protocol.

The secondary control unit is configured to enable manual control of the device. The device can be operated in two operating modes, in manual operating mode or in automatic operating mode. In the automatic operating mode, the device is configured to start the power transfer process when the control unit of the device has received the signal from the vessel's sensor configured to determine that the vessel's ramp has moved down. In manual mode the device has started manually after the vessel's ramp has moved down.

The secondary control unit, connected by the signal switch means to the main controller, the secondary control unit comprises switchboard for manually controlling the hatch of the vessel and the device. The switchboard enables end switches to be connected to the electrical switchboard. The switchboard further enables via the main controller to open and close the hatch, activate and deactivate the hatch by sending corresponding command signals to the vessel's input/output device (I/O) or remote controller of the vessel. The switchboard enables manually via the main controller to regulate the positions of the telescopic arm, move the connection arm up and down, regulate the positions of the supply head. The switchboard further comprises functionalities to establish radio connection between the device and the vessel, switches to switch on and off the power transfer process, emergency stop, connect and disconnect the supply head.

Optionally, the device may comprise a junction box for connecting cables coming from a substation for power delivery in the port to the cables connected through the resource supply channels to the supply head.

According to the embodiments, the device may further comprise an attachment means. The attachment means enable attaching the device to the ramp, quay or pier on the shore or in the port or to the vessel's ramp or other resource supply location.

According to the embodiments, the device may further comprise a rotating base. The rotating base may be a rotating platform. The rotating base enables to turn the device around its axis to provide service to the vessels at multiple directions or on both sides of the quay or ramp. The rotating base enables to install the device e.g., to a dock or a pier so that the device can supply the resources on both sides of the dock or the pier by turning the device from one side another back and forward for supplying the vessels with the resources. This enables even more effectively supply the vessels with the resources because the vessels can reduce the waiting time, i.e., when a first vessel starts the supply cycle on one side if the dock or pier, a second vessel can already maneuver itself into the supply location on the other side of the dock or pier and when the supply cycle of the first vessel has ended the device can immediately turn the supply head towards the second vessel and continue with the supply cycle of the second vessel. Thus, the second vessel doesn't have to wait once the first vessel has left the dock or pier.

Optionally, the resource supply management device may further comprise an interlocking system for ensuring that all the necessary conditions are fulfilled, and the device is ready for connection with the resource transfer socket of the vessel.

In another aspect, an embodiment of the present disclosure provides a resource transfer socket for co-operation with the supply head of claim 1, wherein the resource transfer socket comprises a guidance cone, a connector and one or more markers for a machine vision. The one or more markers can be e.g., a colored marking, LED or other light indicators, or the camera or the system is configured to recognize the resource transfer socket from the camera view. Optionally, the resource transfer socket contains primary connection knives for power connection P+; P-; PE and 15 secondary pilot contacts. Power connection will carry circuit current up to 5000A on 1000VDC. The control power voltage on secondary pilot pins will be less than 60V DC or 25V AC safety extra-low voltage type as per IEC 60364-4-41. Connection is designed in principle, that on disconnecting of the supply head will be disconnected first secondary pilot pins and after that primary contacts. This is important for ensuring safe interruption of primary circuits by system commutation devices and to avoid circuit breaking by supply head contacts. Optionally, the resource transfer socket may further comprise a weatherproof hatch in front of it. The hatch may have simple binary inputs open/close and feedback signal hatch opened. The resource transfer socket may comprise a guidance cone, a flange connection between the vessel and the guidance cone, optionally a weather tight sliding door in between the vessel side and the resource transfer socket (yard supply), a front and/or back cover.

The height of the resource transfer socket of the vessel from the quay may vary from less than one meter to several meters and depends on the height of the sea level, the tides, the size of the vessel, the location of the resource transfer socket and the vessel's load. E.g., The height of the resource transfer socket from the quay may be from 0.5 -3.5 meters at normal sea level to 2.5-12 meters at maximum sea level and low vessel load. The resource transfer socket height may be 1.2-6.8 meters from the quay at low sea level and full vessel load. The embodiments of the present disclosure enable to adjust the height of the device according to the sea level, the tides, the size of the vessel, the location of the resource transfer socket and the vessel's load.

In third aspect, an embodiment of the present disclosure provides a method for managing a resource supply to a vessel, the method comprises establishing a wireless communication between a resource supply management device according to the embodiments of the present disclosure and a vessel approaching to a resource supply location; receiving from a sensor of the vessel a position data that the that the vessel is in place, in a main controller of the resource supply management device; receiving from the vessel one or more operating commands; moving a supply head of the resource supply management device towards a resource transfer socket location; detecting continuously a location coordinates of one or more markers on the resource transfer socket by a supply head positioning unit; moving the supply head into the resource transfer socket based on the determined location coordinates; adjusting a position of a telescopic arm according to the determined location coordinates.

In the sleep-mode, the resource supply management device of a vessel (i.e., hereinafter the device) is in a closed folded position. When the vessel is approaching to a resource supply location (e.g., a dock, pier, quay in the port, a station) and is not completely stopped yet, the wireless communication (e.g., radio, Bluetooth or other wireless communication) handshake between the device and vessel is established to enable the subsequent mechanical and electrical connection. The distance from the dock at which the connection can be determined may be approximately 10 - 100 meters. After establishing the wireless connection, the vessel opens the hatch of the resource transfer socket and the telescopic arm is moved to the horizontal waiting position. The operation processes and communications are related to between the device on shore and the communication system on board of the vessel.

The vessel reaches the port, the visor is up, the quay ramp height is adjusted, the vessel's ramp is moving down and locked into place by determining by the sensor that the ramp is down. When the vessel is moored, the automatic charging process is beginning after start command by vessel, i.e., when the vessel has reached to the position in dock and the vessel's ramp has been lowered, the start command is sent from the sensor configured to determine the position of the ramp to a main controller of the device. The one or more operation commands (e.g., a start and connect commands, stop and disconnect commands) are sent from the vessel with a push of a button or via automated means or signal after confirmation of successful mooring is established and received in the main controller of the device.

When the vessel is reached into the position near the quay and the captain or stevedore has initiated the resource supply process, the resource supply connection process has started. The supply head is moved closer towards the vessel, the resource supply management device detects that the vessel is in place, the supply head is moved downwards until the location of the resource transfer socket and the supply head is moved into the resource transfer socket to establish the connection.

According to an embodiment, detecting continuously a location coordinates of one or more markers comprises detecting a first coordinates of a first marker for defining the location of the resource transfer socket and by detecting a second coordinates of a second marker for defining a connection setpoint for establishing a connection between the supply head and the resource transfer socket.

In an automatic mode the device is configured to start plugging the supply head into the resource transfer socket automatically. The automatic mode herein refers to the embodiments, wherein the signal to start the resource supply process is sent from the vessel to the device automatically. In a manual mode the a remote control is used by an operator to initiate plugging of the supply head. The manual mode is more preferred in an emergency or maintenance situations. The telescopic arm of the device is moved down smoothly, while the camera attached to the supply head is configured to constantly scan the side of the vessel, looking for the one or more markers for determining the location of the resource transfer socket. At the same time, the distance sensor next to the camera shall ensure that the supply head is not too close to or too far from the side of the vessel.

When the camera has found the one or more markers, the supply head is moved horizontally into the resource transfer socket. At the same time, the camera of the machine vision unit is configured to continue tracking the location of the one or more markers on the resource transfer socket. As the one or more markers move due to the movements of the vessel, the telescopic arm is moved according to the determined movements of the one or more markers. This compensates for the oscillation of the vessel.

The telescopic arm is moved forward until the camera of the machine vision unit detects the location of the resource transfer socket by detecting the location coordinates of the one or more markers. Detecting the location coordinates of the one or more markers comprises detecting a first coordinates of a first marker for defining the location of the resource transfer socket and by detecting a second coordinates of a second marker for defining a connection setpoint for establishing a connection between the supply head and the resource transfer socket.

In an embodiment the one or more markers may be e.g., illuminating LED lights having a diameter of 3-50 millimeters. Thus, the diameter of the illuminating LED lights can be from 3, 7, 12, 17, 23, 28, 35, 41 or 47 up to 5, 10, 15, 20, 25, 30, 35, 40, 45 or 50 millimeters. The one or more markers may be placed to the defined location, e.g., under, above or to the sides of the resource transfer socket. This is necessary to control the device. The one or more markers is target for machine vision unit. According to the location of the one or more markers, the machine vision unit finds the resource transfer socket on board of vessel.

Leading by the machine vision unit, the supply head is inserted into resource transfer socket on board of the vessel. When the supply head has reached the resource transfer socket, the pilot contacts of the supply head are connected, a signal appears that the connection has been established, the connection is registered by the device and the power transfer process can be started.

The supply head is held in the resource transfer socket by a length adjusting means of the telescopic arm which is configured to keep constant pressure on the supply head. Thus, the device may further comprise a pressure sensor for determining the pressure the vessel exerts to the supply head. In case it is determined by the main controller that the pressure is lost, the device is configured to determine a disconnect signal. Disconnection of the supply head of the telescopic arm is initiated when the disconnect signal from the vessel is received in the device, after receiving the disconnect signal, the power transfer is disconnected, the supply head is pulled out from the resource transfer socket, vessel starts moving away and closes the hatch of the resource transfer socket, the device moves to the parking position.

At the same time as the supply head is connected, the tilting means and the horizontal compensator of the telescopic arm is configured to switch to a floating mode to compensate for vessel movements. The supply head of the telescopic arm is supported by the resource transfer socket of the vessel. Thus, for compensating movements of the vessel adjusting a position of a telescopic arm according to the determined location coordinates comprises continuously determining movements of the one or more markers on the resource transfer socket by the supply head positioning unit (e.g., by the camera system of the machine vision unit) and releasing the telescopic arm into free moving floating mode or alternatively, the supply head positioning unit is switched of or not used and in the free moving floating mode the tilting means and the supply head are moving freely and the lifting means starts to raise and lower through an angle sensor when the angle of the telescopic arm exceeds a predetermined angle.

The position of the vessel is monitored by the resource supply device on the quay, wherein the device is configured to define a permitted area, where the vessel's resource supply point can locate. The device is configured to monitor continuously the position of the vessel in the resource supply location. If the vessel is located in the permitted resource supply location, then a signal that the connection status is in order is sent to the main controller. For the connection status signal, the vessel is in permitted area and supply head is held in the resource transfer socket with controlled force. If the device is calculating opportunity, that vessel is moving out from permitted area, then the device configured to cut the signal that the connection status is in order and send the signal to the server. The server can be located in the port or some other remote location or in the cloud. The server is configured to enable to provide software updates to the main controller, to monitor, control and manage the device via the main controller, to monitor, control and manage the resource supply processes. The server is further configured to switch off the connection and send the corresponding signal to the vessel. After confirmed disconnection from the device or from the vessel, the main controller or alternatively the substation is configured to send the permission to the device to pull out the telescopic arm. The telescopic arm is pulled out only with permission from the server, for doublechecking for the safety purposes.

If the vessel moves laterally above the permitted limit during loading, a signal is received in the main controller from the sensor of the horizontal compensator, wherein the horizontal compensator is in the floating mode. The power is cut off and the device is moved to the home position. If the vessel moves away from the quay, it is compensated by adjusting the length of the telescopic arm by the length adjusting means. If the vessel's movement exceeds maximum length of the telescopic arm, a signal from a distance sensor on the telescopic arm is sent to the main controller. The power is cut off and the device is moved to the home position. If the supply head should come out of the resource transfer socket during power transfer, the pilot contacts will be disconnected first. The power is cut off on vessel side and on shore side and the supply head is moved to the home position.

During the time when the telescopic arm is connected, the telescopic arm positions are constantly monitored by the main controller which is configured to obtain the sensor data from the telescopic arm distance and position sensors. When the telescopic arm is moved above limits, signal for power disconnection is sent to electrical system and an emergency release for the supply head of the telescopic arm is performed.

When the vessel starts to leave the port, an automatic signal by means of the sensor configured to determine the position of the ramp or manual disconnection initiated by the captain or other user, is received in the main controller of the device and charging will be finished. After the power is turned off, the supply head is moved to the home position. It is important that the movement of the supply head does not take place at the same time as the movement of the vessel's ramp as they could collide. The movements must take place in sequence. If the vessel leaves the port earlier, the charging can be stopped manually, e.g., by pressing the STOP button. If the vessel leaves the port earlier and the STOP button is not pressed, the signal from the sensor configured to determine the position of the ramp informs that that the ramp is raised and charging is stopped. The supply head will be pulled out from the resource transfer socket. The vessel moves away from the port, the device telescopic arm moves into the waiting position.

In a fourth aspect, an embodiment of the present disclosure provides a controller program for managing a resource supply to a vessel, the controller program comprising instructions to perform the method, according to the embodiments of the present disclosure, when executed on a main controller of a resource supply management device according to the embodiments of the present disclosure. The controller program enables to pre-set and pre-program the criteria for the resource supply process by defining the time of the resource supply duration according to the vessel's needs and managing the resource supply device operating correspondingly, including but not limited to, e.g., to calculate the distances of the telescopic arm according to the data obtained from the distance determining means, to control and manage the supply head positioning unit, to calculate the and manage the movements of the telescopic arm, optionally to control the movement of the rotating base.

### DETAILED DESCRIPTION OF THE DRAWINGS

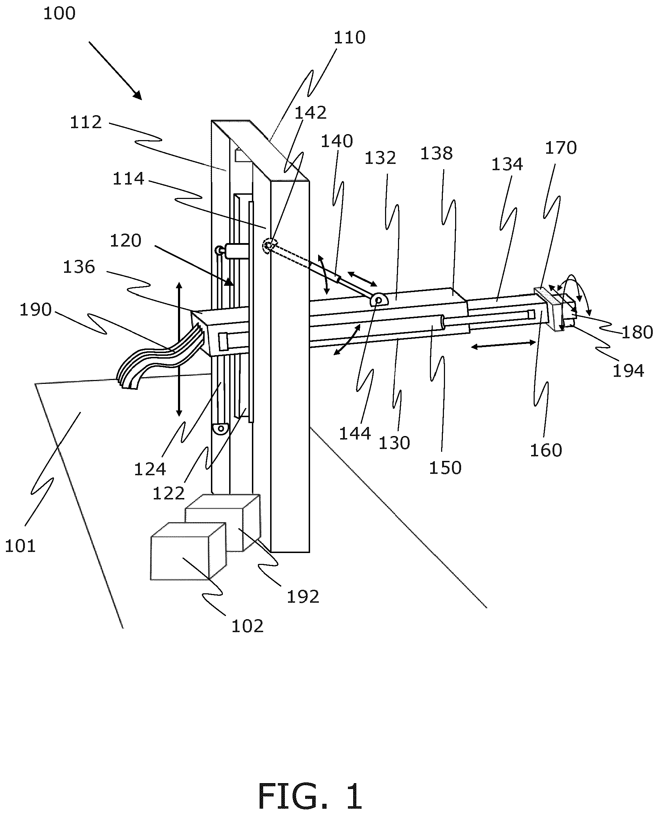

FIG. 1 is an illustrative view of a resource supply management device **100** according to an embodiment of the present disclosure installed to the quay **101.** The resource supply management device of a vessel **100** comprises a main controller **102,** a vertical frame **110** having a first support **112** and a second support **114,** a lifting means **120** attached to the vertical frame **110,** a telescopic arm **130** comprising a base section **132** having a first end **136** and a second end **138** opposite to the first end and a telescopic section **134** adapted to move inside the base section **132,** wherein the first end is pivotally connected to the lifting means **120,** a tilting cylinder **140** comprising a cap end **142** and a rod end **144,** wherein the cap end **142** is pivotally connected to the lifting means and the rod end **144** is pivotally connected to the base section **132,** a telescopic cylinder **150** arranged to move the telescopic section **134** within the base section **132** of the telescopic arm **130,** a horizontal compensator **170** attached to an end **160** of telescopic section, a supply head **180** fastened to the horizontal compensator **170,** one or more resource supply channels **190** arranged through the telescopic arm **130,** a hydraulic power unit **192** connected to the main controller **102.** The device further comprises a supply head positioning unit **194** attached under the supply head **180.** The tilting cylinder **140** is mounted to the upper part of the base section **132.** The horizontal compensator **170** comprises a spherical joint. The supply head is fastened to the telescopic arm end by the spherical joint. The lifting means **120** comprise a sledge **122** and a lifting actuator **124** for moving the sledge together with the telescopic arm vertically upwards and downwards. The lifting sledge is mounted to the frame between the first support and the second support.

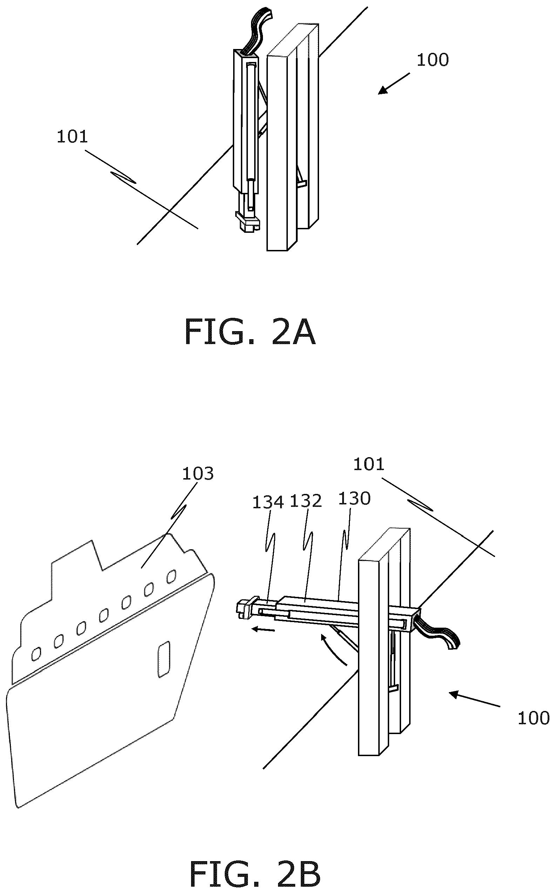

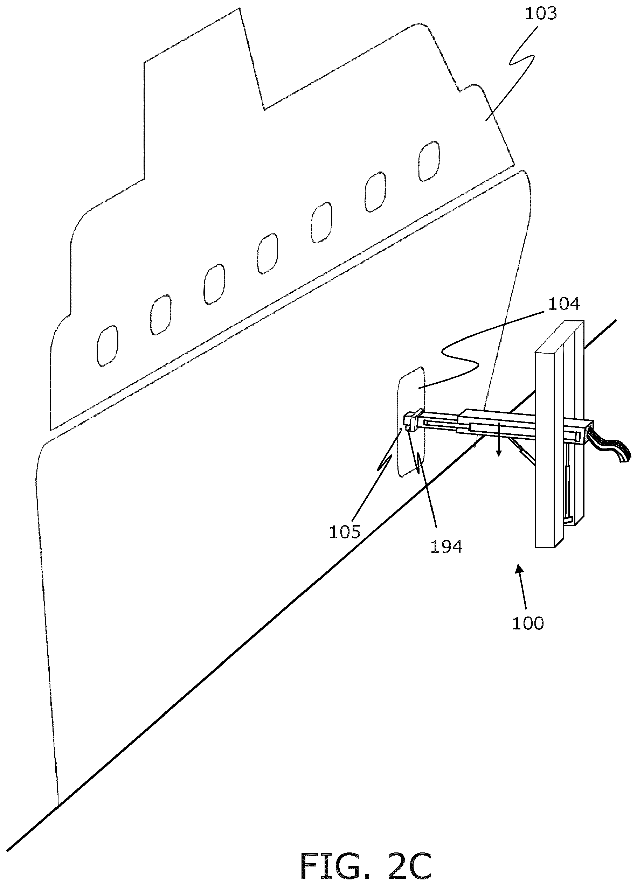

Figures FIG. 2A, FIG. 2B and FIG. 2C illustrate moving of the alternative embodiment of the resource supply management device **100** shown in FIG. 1 according to the present disclosure, wherein the resource supply management device is installed on the quay **101.** In the alternative embodiment, the tilting cylinder **140** is mounted to the lower part of the base section **132.** In FIG. 2A the resource supply management device **100** is shown in a folded parking mode in home position. In FIG. 2B it is shown, when a vessel **103** approaches to the quay **101** in the port, the telescopic arm **130** is moved to the horizontal position and the supply head **180** is moved by moving telescopic section **134** inside the base section **132** of the telescopic arm **130** the towards the vessel **103.** In FIG. 2C is shown that the vessel **103** has arrived at the resource supply location, the telescopic arm **130** is moved downward until the location coordinates of the resource transfer socket **104** having markers **105** are detected by a camera of the machine vision unit **194** to enable to move the supply head into the resource transfer socket **104.**

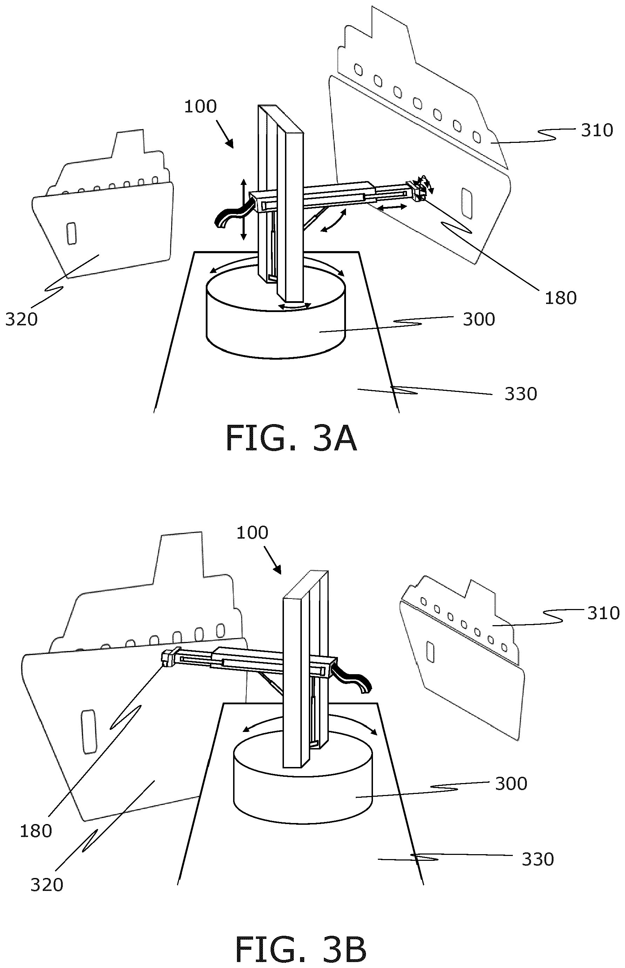

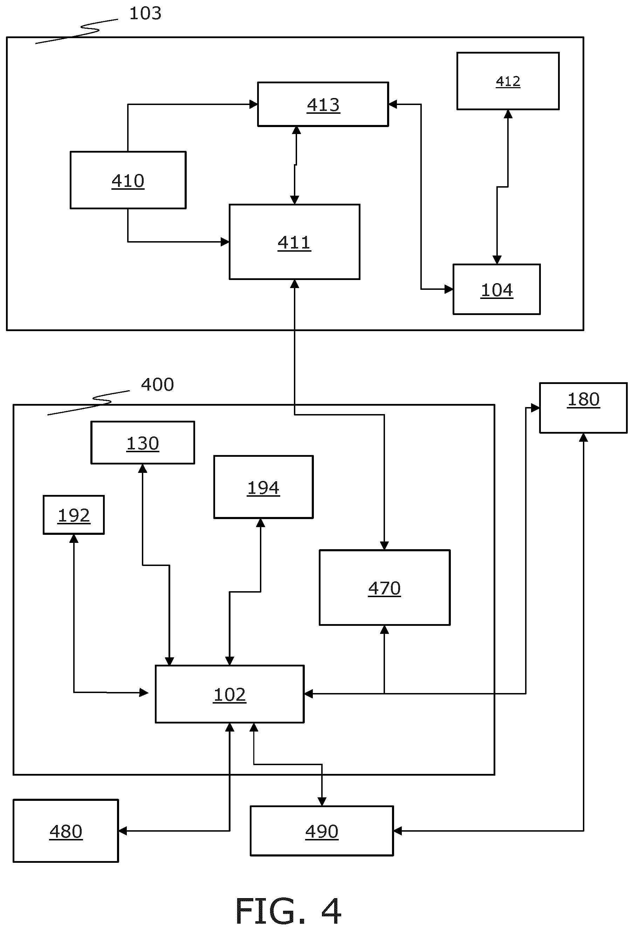

In figures FIG. 3A and FIG. 3B an alternative embodiment of the device is shown, wherein the device **100** comprises a rotating base **300.** The rotating base **300** is configured to turn the device around its axis to provide service to the vessels **310, 320** at multiple directions or on both sides of the quay **330** and supply the resources on both sides of the dock by turning the device from one side another back and forward for supplying the vessels with the resources. I.e., when a first vessel **310** starts the supply cycle on one side if the dock **330,** a second vessel **320** can already maneuver itself into the supply location on the other side of the dock and when the supply cycle of the first vessel **310** has ended the device can immediately turn the supply head **180** towards the second vessel **320** and continue with the supply cycle of the second vessel. FIG. 4 is a block-scheme illustrating the method according to an embodiment of the present disclosure. The method comprises establishing a wireless communication between a via the communication means **470** of a resource supply management device **100** and a communication means **411** of a vessel **103** approaching to a resource supply location; receiving from a sensor **410** of the vessel **103** a data of the ramp position, in a main controller **102** of the resource supply management device; receiving from the vessel one or more operating commands; moving a supply head **180** of the resource supply management device towards a resource transfer socket **104** location; detecting continuously a location coordinates of one or more markers on the resource transfer socket **104** by a supply head positioning unit **194;** moving the supply head **180** into the resource transfer socket **104** based on the determined location coordinates; adjusting a position of a telescopic arm according to the determined location coordinates. The resource transfer socket of the vessel is connected to a vessel power or battery management system **412.** The communication means **411** of a vessel **103** is connected to the vessel's input/output device (I/O) or remote controller of the vessel **413.** The main controller **102** is communicatively connected to the server **480.** The main controller **102** is connected to the substation **490** in the port. The main controller **102** is also connected to the supply head **180,** wherein the supply head **180** is connected via the cables with the substation **490.**

## Claims

1. A resource supply management device (100) for a vessel (103, 310, 320), wherein the resource supply device comprises
- a main controller (102) comprising a memory to store power supply unit data, sensor data, camera data, and a processor configured to control and manage a resource supply process, to receive data from a power supply unit, based on the information received from the power supply unit the processor of the main controller is configured to manage the operating of the power supply unit;
- a vertical frame (110) having a first support (112) and a second support (114);
- a lifting means (120) attached to the vertical frame (110), wherein the lifting means comprise a sledge (122) and a lifting actuator (124), and the sledge is mounted to the vertical frame (110) between the first support (112) and the second support (114);
- a telescopic arm (130) arranged between the first support (112) and the second support (114) to move vertically upwards and downwards and to rotate angularly and to tilt, the telescopic arm (130) comprising a base section (132) having a first end (136) and a second end (138) opposite to the first end and a telescopic section (134) adapted to move inside the base section (132), wherein the first end is pivotally connected to the lifting means (120);
- a tilting means (140) arranged to enable angular rotation and tilting movement of the telescopic arm (130), the tilting means (140) comprising a cap end (142) and a rod end (144), wherein the cap end (142) is pivotally connected to the lifting means (120) and the rod end (144) is pivotally connected to the base section (132) of the telescopic arm (130);
- a length adjusting means (150) arranged to move the telescopic section (134) within the base section (132) of the telescopic arm (130);
- a horizontal compensator (170) attached to an end (160) of telescopic section and arranged to be moving and pivoting to compensate for the vessel's movement;
- a supply head (180) fastened to the horizontal compensator (170), wherein the supply head is arranged to move in the horizontal plane relative to the telescopic section;
- one or more resource supply channels (190) arranged through the telescopic arm (130);
- the power supply unit (192) connected to the main controller (102).

2. The device according to claim 1, wherein the device further comprises one or more distance determining means.

3. The device according to claim 1 or 2, wherein the device further comprises a supply head positioning unit (194).

4. The device according to any of preceding claims, wherein the device further comprises at least one of a communication means (470), a secondary control unit, an electrical junction box, an electrical switchboard.

5. The device according to any of preceding claims, wherein the tilting means (140) is mounted to the upper part of the base section (132), to the lower part of the base section (132) or to the side part of the base section (132).

6. The device according to any of preceding claims, wherein the device further comprises an attachment means.

7. The device according to any of preceding claims, wherein the device further comprises a rotating base (300).

8. The device according to any of preceding claims, wherein the horizontal compensator (170) comprises a spherical joint.

9. The device according to any of preceding claims, wherein the one or more resource supply channels (190) comprise liquid transferring means.

10. A method for managing a resource supply to a vessel, the method comprises
- establishing a wireless communication between a resource supply management device according to any of claims 1-9 and a vessel approaching to a resource supply location;
- receiving from a sensor (410) of the vessel a position data that the vessel is in place, in a main controller of the resource supply management device;
- receiving from the vessel one or more operating commands;
- moving a supply head (180) of the resource supply management device towards a resource transfer socket (104) location;
- detecting continuously a location coordinates of one or more markers on the resource transfer socket (104) by a supply head positioning unit (194);
- moving the supply head (180) into the resource transfer socket (104) based on the determined location coordinates;
- adjusting a position of a telescopic arm according to the determined location coordinates.

11. The method according to claim 10, wherein detecting continuously a location coordinates of one or more markers comprises detecting a first coordinates of a first marker for defining the location of the resource transfer socket and by detecting a second coordinates of a second marker for defining a connection setpoint for establishing a connection between the supply head and the resource transfer socket

12. The method according to claim 10 or 11, wherein adjusting a position of a telescopic arm according to the determined location coordinates comprises continuously determining movements of the one or more markers on the resource transfer socket by the machine vision unit; releasing the telescopic arm into free moving floating mode.

13. A controller program for managing a resource supply to a vessel comprising instructions to perform the method as claimed in any one of the claims 10 to 12 when executed on a main controller of a resource supply management device according to any of claims 1-9.

## Patentansprüche

1. Ressourcenversorgungsverwaltungsvorrichtung (100) für ein Wasserfahrzeug (103, 310, 320), wobei die Ressourcenversorgungsvorrichtung umfasst
- eine Hauptsteuerung (102), umfassend einen Speicher, um Leistungsversorgungseinheitsdaten, Sensordaten, Kameradaten zu speichern, und einen Prozessor, der konfiguriert ist, um einen Ressourcenversorgungsprozess zu steuern und zu verwalten, um Daten von einer Leistungsversorgungseinheit zu empfangen, wobei der Prozessor der Hauptsteuerung konfiguriert ist, um basierend auf den Informationen, die von der Leistungsversorgungseinheit empfangen werden, das Betreiben der Leistungsversorgungseinheit zu verwalten;
- einen vertikalen Rahmen (110), der eine erste Stütze (112) und eine zweite Stütze (114) aufweist;
- ein Hubmittel (120), das an dem vertikalen Rahmen (110) angebracht ist, wobei das Hubmittel einen Schlitten (122) und einen Hubaktuator (124) umfasst, und der Schlitten an dem vertikalen Rahmen (110) zwischen der ersten Stütze (112) und der zweiten Stütze (114) montiert ist;
- einen Teleskoparm (130), der zwischen der ersten Stütze (112) und der zweiten Stütze (114) angeordnet ist, um sich vertikal nach oben und nach unten zu bewegen und sich winklig zu drehen und zu neigen, der Teleskoparm (130) umfassend einen Basisabschnitt (132), der ein erstes Ende (136) und ein dem ersten Ende gegenüberliegendes zweites Ende (138) aufweist, und einen Teleskopabschnitt (134), der angepasst ist, um sich innerhalb des Basisabschnitts (132) zu bewegen, wobei das erste Ende mit dem Hubmittel (120) schwenkbar verbunden ist;
- ein Neigemittel (140), das angeordnet ist, um eine Winkeldrehung und eine Neigungsbewegung des Teleskoparms (130) zu ermöglichen, das Neigemittel (140) umfassend ein Kappenende (142) und ein Stangenende (144), wobei das Kappenende (142) mit dem Hubmittel (120) schwenkbar verbunden ist und das Stangenende (144) mit dem Basisabschnitt (132) des Teleskoparms (130) schwenkbar verbunden ist;
- ein Längeneinstellmittel (150), das angeordnet ist, um den Teleskopabschnitt (134) innerhalb des Basisabschnitts (132) des Teleskoparms (130) zu bewegen;
- einen horizontaler Kompensator (170), der an einem Ende (160) des Teleskopabschnitts angebracht und angeordnet ist, um sich zu bewegen und zu schwenken, um die Bewegung des Wasserfahrzeugs auszugleichen;
- einen Versorgungskopf (180), der an dem horizontalen Kompensator (170) befestigt ist, wobei der Versorgungskopf angeordnet ist, um sich in der horizontalen Ebene relativ zu dem Teleskopabschnitt zu bewegen;
- einen oder mehrere Ressourcenversorgungskanäle (190), die durch den Teleskoparm (130) angeordnet sind;
- die Leistungsversorgungseinheit (192), die mit der Hauptsteuerung (102) verbunden ist.

2. Vorrichtung nach Anspruch 1, wobei die Vorrichtung ferner ein oder mehrere Abstandsbestimmungsmittel umfasst.

3. Vorrichtung nach Anspruch 1 oder 2, wobei die Vorrichtung ferner eine Versorgungskopfpositioniereinheit (194) umfasst.

4. Vorrichtung nach einem der vorstehenden Ansprüche, wobei die Vorrichtung ferner mindestens eines von einem Kommunikationsmittel (470), einer sekundären Steuereinheit, einem elektrischen Anschlusskasten, einer elektrischen Schalttafel umfasst.

5. Vorrichtung nach einem der vorstehenden Ansprüche, wobei das Neigemittel (140) an dem oberen Teil des Basisabschnitts (132), an dem unteren Teil des Basisabschnitts (132) oder an dem Seitenteil des Basisabschnitts (132) montiert ist.

6. Vorrichtung nach einem der vorstehenden Ansprüche, wobei die Vorrichtung ferner ein Anbringungsmittel umfasst.

7. Vorrichtung nach einem der vorstehenden Ansprüche, wobei die Vorrichtung ferner eine sich drehende Basis (300) umfasst.

8. Vorrichtung nach einem der vorstehenden Ansprüche, wobei der horizontale Kompensator (170) ein Kugelgelenk umfasst.

9. Vorrichtung nach einem der vorstehenden Ansprüche, wobei der eine oder die mehreren Ressourcenversorgungskanäle (190) Flüssigkeitsübertragemittel umfassen.

10. Verfahren zum Verwalten einer Ressourcenversorgung eines Wasserfahrzeugs, wobei das Verfahren umfasst
- Herstellen einer drahtlosen Kommunikation zwischen einer Ressourcenversorgungsverwaltungsvorrichtung nach einem der Ansprüche 1 bis 9 und einem sich einem Ressourcenversorgungsort nähernden Wasserfahrzeug;
- Empfangen, von einem Sensor (410) des Wasserfahrzeugs, von Positionsdaten, dass sich das Wasserfahrzeug an seinem Platz befindet, in einer Hauptsteuerung der Ressourcenversorgungsverwaltungsvorrichtung;
- Empfangen, von dem Wasserfahrzeug, eines oder mehrerer Betriebsbefehle;
- Bewegen eines Versorgungskopfs (180) der Ressourcenversorgungsverwaltungsvorrichtung in Richtung eines Orts einer Ressourcenübertragungsbuchse (104);
- kontinuierliches Erfassen von Ortskoordinaten einer oder mehrerer Markierungen an der Ressourcenübertragungsbuchse (104) über eine Versorgungskopfpositioniereinheit (194);
- Bewegen des Versorgungskopfs (180) in die Ressourcenübertragungsbuchse (104) basierend auf den bestimmten Ortskoordinaten;
- Einstellen einer Position eines Teleskoparms gemäß den bestimmten Ortskoordinaten.

11. Verfahren nach Anspruch 10, wobei das kontinuierliche Erfassen von Ortskoordinaten einer oder mehrerer Markierungen das Erfassen von ersten Koordinaten einer ersten Markierung zum Definieren des Orts der Ressourcenübertragungsbuchse und das Erfassen von zweiten Koordinaten einer zweiten Markierung zum Definieren eines Verbindungssollwerts zum Herstellen einer Verbindung zwischen dem Versorgungskopf und der Ressourcenübertragungsbuchse umfasst.

12. Verfahren nach Anspruch 10 oder 11, wobei das Einstellen einer Position eines Teleskoparms gemäß den bestimmten Ortskoordinaten ein kontinuierliches Bestimmen von Bewegungen der einen oder der mehreren Markierungen an der Ressourcenübertragungsbuchse über die Einheit für maschinelles Sehen umfasst; Freigeben des Teleskoparms in einen frei beweglichen Schwimmmodus.

13. Steuerungsprogramm zum Verwalten einer Ressourcenversorgung eines Wasserfahrzeugs, umfassend Anweisungen, um das Verfahren, wie in einem der Ansprüche 10 bis 12 beansprucht, durchzuführen, wenn sie auf einer Hauptsteuerung einer Ressourcenversorgungsverwaltungsvorrichtung nach einem der Ansprüche 1 bis 9 ausgeführt werden.

## Revendications

1. Dispositif de gestion d'alimentation de ressources (100) pour un navire (103, 310, 320), dans lequel le dispositif d'alimentation de ressources comprend
- un dispositif de commande principal (102) comprenant une mémoire pour stocker des données d'unité d'alimentation électrique, des données de capteur, des données de caméra et un processeur configuré pour commander et gérer un processus d'alimentation de ressources, pour recevoir des données d'une unité d'alimentation électrique, sur la base des informations reçues de l'unité d'alimentation électrique, le processeur du dispositif de commande principal est configuré pour gérer le fonctionnement de l'unité d'alimentation électrique ;
- un cadre vertical (110) ayant un premier support (112) et un second support (114) ;
- un moyen de levage (120) fixé au cadre vertical (110), dans lequel le moyen de levage comprend un traîneau (122) et un actionneur de levage (124), et le traîneau est monté sur le cadre vertical (110) entre le premier support (112) et le second support (114) ;
- un bras télescopique (130) agencé entre le premier support (112) et le second support (114) pour se déplacer verticalement vers le haut et vers le bas et pour tourner angulairement et s'incliner, le bras télescopique (130) comprenant une section de base (132) ayant une première extrémité (136) et une seconde extrémité (138) opposée à la première extrémité et une section télescopique (134) adaptée pour se déplacer à l'intérieur de la section de base (132), dans lequel la première extrémité est reliée de manière pivotante au moyen de levage (120) ;
- un moyen d'inclinaison (140) agencé pour permettre une rotation angulaire et un mouvement d'inclinaison du bras télescopique (130), le moyen d'inclinaison (140) comprenant une extrémité de capuchon (142) et une extrémité de tige (144), dans lequel l'extrémité de capuchon (142) est reliée de manière pivotante au moyen de levage (120) et l'extrémité de tige (144) est reliée de manière pivotante à la section de base (132) du bras télescopique (130) ;
- un moyen d'ajustement de longueur (150) agencé pour déplacer la section télescopique (134) à l'intérieur de la section de base (132) du bras télescopique (130) ;
- un compensateur horizontal (170) fixé à une extrémité (160) de section télescopique et agencé pour se déplacer et pivoter afin de compenser le mouvement du navire ;
- une tête d'alimentation (180) fixée au compensateur horizontal (170), dans lequel la tête d'alimentation est agencée pour se déplacer dans le plan horizontal par rapport à la section télescopique ;
- un ou plusieurs canaux d'alimentation en ressources (190) agencés à travers le bras télescopique (130) ;
- l'unité d'alimentation électrique (192) connectée au dispositif de commande principal (102).

2. Dispositif selon la revendication 1, dans lequel le dispositif comprend en outre un ou plusieurs moyens de détermination de distance.

3. Dispositif selon la revendication 1 ou 2, dans lequel le dispositif comprend en outre une unité de positionnement de tête d'alimentation (194).

4. Dispositif selon l'une quelconque des revendications précédentes, dans lequel le dispositif comprend en outre au moins l'un parmi un moyen de communication (470), une unité de commande secondaire, une boîte de jonction électrique, un tableau de distribution électrique.

5. Dispositif selon l'une quelconque des revendications précédentes, dans lequel le moyen d'inclinaison (140) est monté sur la partie supérieure de la section de base (132), sur la partie inférieure de la section de base (132) ou sur la partie latérale de la section de base (132).

6. Dispositif selon l'une quelconque des revendications précédentes, dans lequel le dispositif comprend en outre un moyen de fixation.

7. Dispositif selon l'une quelconque des revendications précédentes, dans lequel le dispositif comprend en outre une base rotative (300).

8. Dispositif selon l'une quelconque des revendications précédentes, dans lequel le compensateur horizontal (170) comprend un joint sphérique.

9. Dispositif selon l'une quelconque des revendications précédentes, dans lequel le ou les canaux d'alimentation en ressources (190) comprennent des moyens de transfert de liquide.

10. Procédé permettant de gérer un approvisionnement en ressources à un navire, le procédé comprend
- l'établissement d'une communication sans fil entre un dispositif de gestion de l'approvisionnement en ressources selon l'une quelconque des revendications 1 à 9 et un navire s'approchant d'un emplacement d'approvisionnement en ressources ;
- la réception à partir d'un capteur (410) du navire de données de position indiquant que le navire est en place, dans un dispositif de commande principal du dispositif de gestion de l'approvisionnement en ressources ;
- la réception du navire d'une ou plusieurs commandes d'exploitation ;
- le déplacement d'une tête d'alimentation (180) du dispositif de gestion d'alimentation en ressources vers un emplacement de douille de transfert de ressources (104) ;
- la détection en continu des coordonnées d'emplacement d'un ou plusieurs marqueurs sur la douille de transfert de ressources (104) par une unité de positionnement de tête d'alimentation (194) ;
- le déplacement de la tête d'alimentation (180) dans la douille de transfert de ressources (104) sur la base des coordonnées d'emplacement déterminées ;
- l'ajustement d'une position d'un bras télescopique selon les coordonnées d'emplacement déterminées.

11. Procédé selon la revendication 10, dans lequel la détection continue de coordonnées d'emplacement d'un ou plusieurs marqueurs comprend la détection de premières coordonnées d'un premier marqueur permettant de définir l'emplacement de la prise de transfert de ressources et par la détection d'une seconde coordonnée d'un second marqueur permettant de définir un point de consigne de liaison permettant d'établir une connexion entre la tête d'alimentation et la prise de transfert de ressources

12. Procédé selon la revendication 10 ou 11, dans lequel l'ajustement d'une position d'un bras télescopique selon les coordonnées d'emplacement déterminées comprend la détermination en continu de mouvements du ou des marqueurs sur le support de transfert de ressources par l'unité de vision industrielle ; la libération du bras télescopique en mode flottant à mouvement libre.

13. Programme de dispositif de commande permettant de gérer une alimentation de ressources à un navire comprenant des instructions pour effectuer le procédé selon l'une quelconque des revendications 10 à 12, lorsqu'elles sont exécutées sur un dispositif de commande principal d'un dispositif de gestion d'alimentation de ressources selon l'une quelconque des revendications 1 à 9.
